# EUROPEAN PATENT SPECIFICATION

(11) **EP 0 489 214 B1**
(45) Date of publication and mention of the grant of the patent: **20.03.1996**
(21) Application number: 90480203.0
(22) Date of filing: 05.12.1990
(51) Int. Cl.: H04M 11/06

(54) **Coupling device to be connected to a dce for allowing the connection to different public switched telephone networks, dce and workstation including the same**
Kopplungseinrichtung zum Anschluss einer Datenübertragungs- anschu$einrichtung an verschiedene öffentliche Fernsprechwahlnetzen sowie eine Datenübertragungsanschlu$einrichtung und eine Arbeitsstation mit einer solchen Kopplungseinrichtung
Dispositif de couplage destiné à être connecté à un interface de transmission de données pour la connexion à des différents réseaux téléphoniques commutés et une station de travail et un interface de transmission comprenant un tel dispositif

(43) Date of publication of application: 10.06.1992
(73) Proprietor: International Business Machines Corporation, Armonk, N.Y. 10504 (US)
(72) Inventor: Bruno, André, F-06640 Saint-Jeannet (FR); Fieschi, Jacques, F-06700 Saint-Laurent-du-Var (FR); Martin, Jean, F-06800 Cagnes-Sur-Mer (FR); Vautier, Rémi, F-06200 Nice (FR)
(74) Representative: Tubiana, Max

(56) References cited:
- EP-A- 0 309 627
- US-A- 4 841 561

## Description

### Technical field of the invention

The invention relates to data transmission and particularly to data transmission between a data terminating equipment (DTE) and a public switched telephone network (PSTN).

Public Switched Telephone Networks (PSTN) are of major importance in the data transmission field since they can be used in order to communicate data from a first data terminating equipment (DTE) to a second, remote, DTE. The attachment of a DTE to a telephone network requires a device known as a DCE or a modem which particularly provides the adaptation of the electrical signals to the characteristics of the switched telephone network which is operated in the country of the user. The DCE particularly comprises a coupler circuit which includes the electric components matching the electric requirements of a specific PSTN. However, since the characteristics of the existing PSTNs in the world substantially differ, a DCE which is designed to operate in a determined country, for instance France, will not operate when connected to the PSTN of another country. It should be noticed that at least thirty telephone networks having different characteristics exist in the world, and therefore the user has to change the DCE everytime he wishes to connect a DTE to a different PSTN.

Japan patent application JP-A-61274550 discloses a modem which permits the connection to different PSTNs. The system disclosed uses a country specification table for storing data being characteristic of different PSTN and particularly data relating to the calling method etc... Once the data relating to the appropriate PSTN to which is intended to be connected the DCE has been selected, the modem is able to operate with the latter PSTN. However, the modem includes all the coupler circuits matching the electric requirements of the different PSTNs to which the modem is intended to be connected to. That unfortunately results in a a complex modem including a great deal of electronic components and particularly voluminous transformers, relays etc... which can not be easily integrated in an interface card for a workstation such as a personal system computer.

EP-A-0 309 627 discloses an Apparatus for connecting data processing equipment to a communications network includes hardware for a range of different communications standards. A coupler (preferably in the form of a cable) having a particular standard communications plug contains an identifying code associated with that particular standard plug, which code is used to configure the apparatus to that particular standard. The apparatus contains a digital signal processor controlled by control code contained in a control store having associated therewith a standard identifier code. Control logic reads the standard identifier code associated with the control code and the standard identifying code in the coupler and enables the apparatus if the two match (or disables if they do not match).

Copending application EP-A-0489 215 entitled "Coupling device to be connected to a DCE for the connection to a public switched telephone network having a local power supply circuit for allowing the use of the local telephone, DCE and workstation including the same" relates to a coupler which allows the communication of vocal messages between a telephone set and the DCE attached to the coupler.

Therefore, a need has appeared for a simple device which allows the connection of a data terminating equipment to a wide variety of switched networks, all having different characteristics, and which does not necessitate the DCE to include all the needed electronic components, thereby allowing the latter DCE to be easily integrated.

### Summary of the invention

It is an object of the invention to provide a coupling device for connecting a DCE to a PSTN which allows the DCE to be automatically adapted to operate with said PSTN.

It is another object of the invention to provide a DCE for the connection of a DTE to a wide variety of PSTN.

It is a further object of the invention to provide an DCE interface card for a workstation such as a personal computer system which, when removably connected to a coupling device adapted to a specific PSTN, is automatically adapted to operate with said specific PSTN.

It is another object to provide a workstation which can be easily connected to any type of PSTN existing in the world.

These and other objects of the invention are achieved by means of the coupling device for connecting a DCE to a PSTN which is defined in claim 1. Briefly, the coupling device comprises plugging means for removably connecting the latter to the DCE, means for storing an identification code corresponding to a specific type of PSTN to which the coupler is intended to be connected to, and means responsive to a control signal received from the DCE for transmitting the identification code to the DCE. The invention also provides a DCE receiving the coupling device and which includes processing means and a storage for storing tables, each table comprising data characterizing a specific PSTN which the DCE is intended to operate with. The DCE reads the identification code during an identification phase by transmitting the control signal and selects in response to said reading the appropriate table corresponding to the coupling device. Therefore, by simply connecting an appropriate coupling device, a same DCE can be easily adapted to operate with a specific PSTN. Moreover, since the voluminous components are located into the coupling device, the DCE can be easily integrated.

There is further provided a workstation which includes the DCE according to the present invention and which, when connected to an appropriate coupling device, performs an identification phase in order to determine the type of the coupling device and automatically selects the corresponding table. the workstation can therefore be easily adapted to operate with any type of PSTN.

### Description of the drawings

Figure 1 is a view of the preferred embodiment of the invention.

Figure 2 illustrates the coupler which is attached to the base card of the DCE.

Figure 3 shows a flow chart of the country code validation process in accordance with a preferred embodiment of the invention.

Figure 4 details a flow chart of the process relative to an out-going call.

Figure 5 details the process relative to a incoming call.

Figure 6a to 6d are views illustrating the ring detector process.

Figures 7A and 7B are views of preferred embodiments of local feeder circuit 219.

### Description of the preferred embodiment of the invention

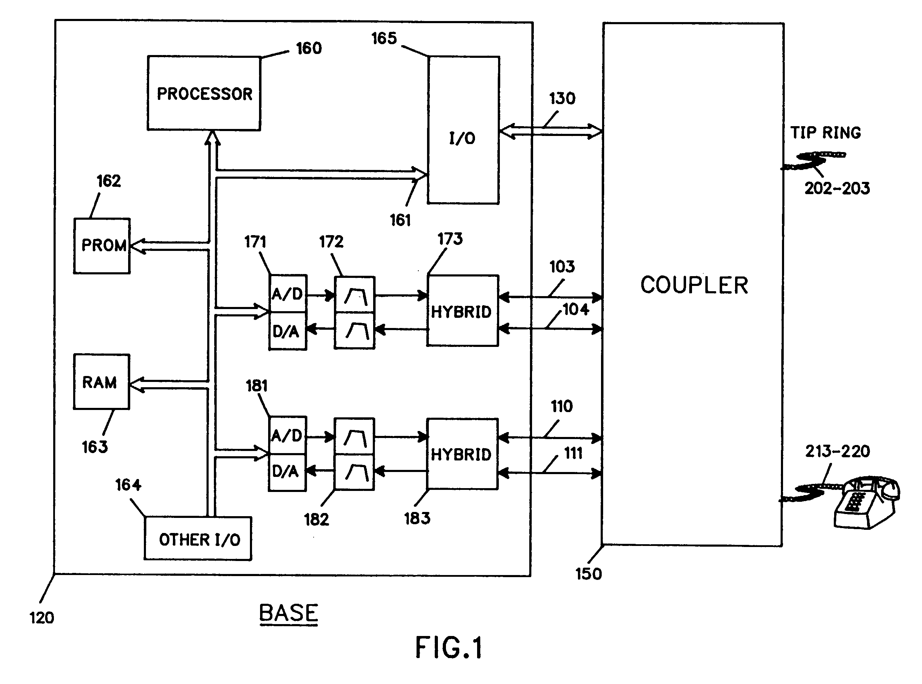

Figure 1 shows the preferred embodiment of the DCE according to the present invention which includes a base system 120 to which is connected to a coupler 150. Contrary to the base system 120 which is unique for a wide variety of PSTN, coupler 150 is specific to a determined PSTN and includes all the hardware components which are necessary to comply with the electrical requirements of the considered PSTN. In the preferred embodiment of the invention, coupler circuit 150 takes the form of a box which can be removably attached to base 120 by means of a multiconductor cable. Base circuit 120 consists in an interface card which is intended to be connected to a workstation such as a personal computer operating as a DTE transmitting and receiving data via a switched telephone network in accordance with the requirements of a specific country. It should be however noticed that the invention concerns any type of DCE, taking the form either of interface cards or of a stand-alone DCE. In one particular embodiment, base circuit 120 is included into a portable personal computer system and coupler circuit 150 is a box which is connected to the latter portable system. Coupler 150 particularly provides, as will be detailed hereinafter, the electrical adaptation to the electrical requirements of the telephone network of a specific country. Base card 120 includes a processor 160 which is connected via a bus 161 to a PROM storage 162, to a RAM storage 163, to Input/Output (I/O) blocks 165 providing the communication between coupler 150 via bus 130 and other I/O devices 164 which are not part of the invention. Processor 160 communicate with an hybrid 173 (resp. 183) via a block of A/D and D/A converter 171 (resp. 181) and pass-band filters 172 (resp. 182). Hybrid 173 or 183 is a two-wires/four-wires well known in the data communication art. Hybrid 173 (resp. 183) communicates with coupler 150 via a set of two wires 103-104 (resp. 110-111). As mentioned above, processor 160 in base card 120 controls coupler 150 by means of bus 130 which is connected to I/O circuit 165. Bus 130 consists in the following leads:

| | |
|---|---|
| lead 100 | off-hook |
| lead 101 | dial pulse |
| lead 104 | dial loop |
| leads 105-108 | identification leads |
| lead 109 | SW hook |
| lead 112 | hand-set I/O |

The function of those leads will be better understood with respect to the hereinafter description. It should be noted that base circuit 120 further provide coupler 150 with positive Vcc and ground potentials, the latter potential being particularly used for local feeder circuit 219 as will be described hereinafter. The connection of the coupler circuit 140 to the base 120 is achieved by means of a plug which can receive a multiconductor cable.

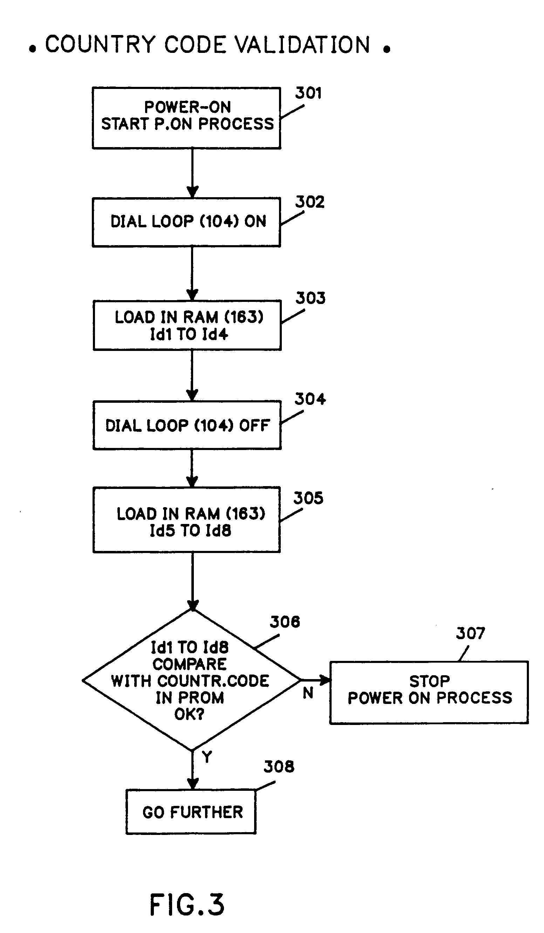

PROM storage 162 stores the software program which is required for performing the instructions detailed hereinafter with respect to the flow chart of figures 3-6. PROM 162 further includes a set of PSTN tables in which are stored parameters characterizing the different telephone networks existing in different countries to which is likely to be connected the DCE according to the invention. The latter PSTN tables particularly includes information relative to the range of frequencies of the signal on the telephone lines, information relative to the different signalling tones characterizing a specific PSTN. Those PSTN tables which are stored into a PROM storage into the preferred embodiment of the invention can also be loaded into RAM storage 163 from any other storing devices such as a 3.5 inch-disquette devices which is connected to the DTE (particularly in the case when the DTE is a personal computer).

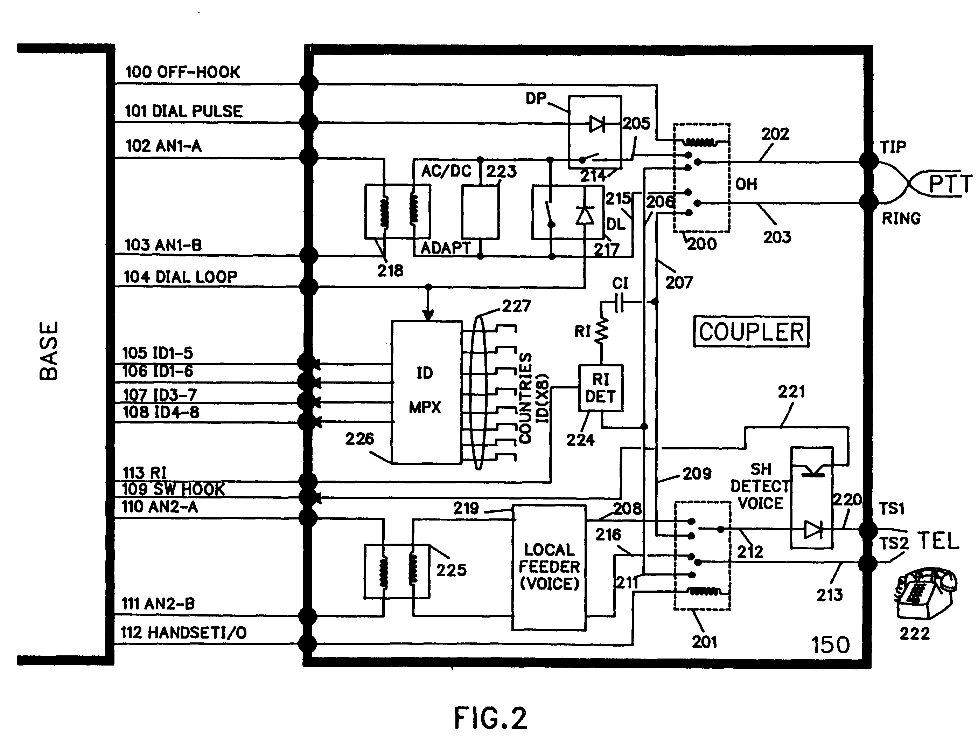

Figure 2 illustrates the preferred embodiment of the coupler 150 according to the present invention. Coupler 150 is connected to the 'tip-ring' leads of the PSTN considered, the latter 'tip-ring' leads being connected to a off-hook relay 200 which performs the connection of the base card 120 to the PSTN network under control of processor 160. More accurately, 'tip-ring' leads are connected to the two input leads 202 and 203 of switch 200. Relay 200 has a third input lead 205 which is connected to a DIAL-pulse circuit 214, a lead 206 which is connected to an input lead 211 of a 'Hand-set IO' relay 201, which switch 201 being under control of processor 160 via control lead 112. Relay 200 has a further input lead 215 which is connected to the secondary winding of transformer 218. At last Relay 200 has a input lead 207 which is connected to an input lead 209 of relay 201. Relay 201 has inputs leads 208 and 209 which are connected to a local feeder voice circuit 219, the operating of which will be described hereinafter. Input leads 212 and 213 of relay 201 are respectively connected to a Telephone-Set1 (Ts1) lead 220 via a switch-hook detector circuit 221 and to a Ts2 lead 213. Relay 200 provides the OFF-HOOK function well known in the telecommunication art. Whenever processor 160 sets leads 100 and 112 to a low level, 'tip-ring' leads of the PSTN network are connected directly to the telephone set via relay 200, relay 201 and SH detector circuit 221. Whenever the user hand-sets the telephone, a flow of current appears at leads 220-213, the latter flow of current being detected by SH detector circuit 221 (being a photocoupler in the preferred embodiment of the invention) and transmitted to processor 160 via lead 109.

When processor 160 wishes to transmit data to the PSTN, it activates lead 100 and 101 so that to connect the secondary winding of transformer 218 to 'tip-ring' leads via relay 200 and a DP circuit 214. DP circuit 214 performs a decadic pulsing as described hereinafter. To achieve this, processor 160 transmits a succession of break-makes signals via lead 101 to DP circuit 214 which accordingly opens and closes the electrical circuit. It should be noticed that the cadence of those break-make signals strongly depends on the specific PSTN considered, and the corresponding parameters allowing a connection of the DCE to a large number of PSTN, are stored into the above mentioned tables.

A dial-loop circuit 217 is connected in parallel on the secondary winding of transformer 218 and provides the short-circuit of the latter when the processor generates break-make signals on lead 101. To achieve this activates a dial-loop lead 104 which is connected to the control input of DL circuit 217. In the preferred embodiment of the invention dial-loop circuit 217 is a photo relay circuit. The PSTN tables stored into PROM storage 162 includes information relative to the period during which DL circuit 217 performs a short-circuit of the secondary of transformer 218, the latter period being a characteristic of the specific PSTN considered.

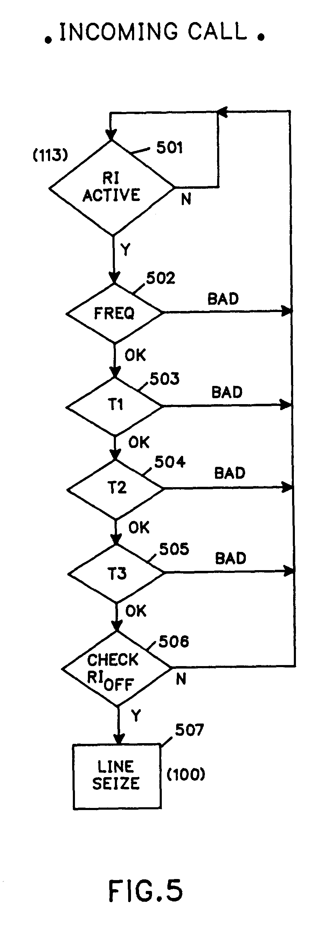

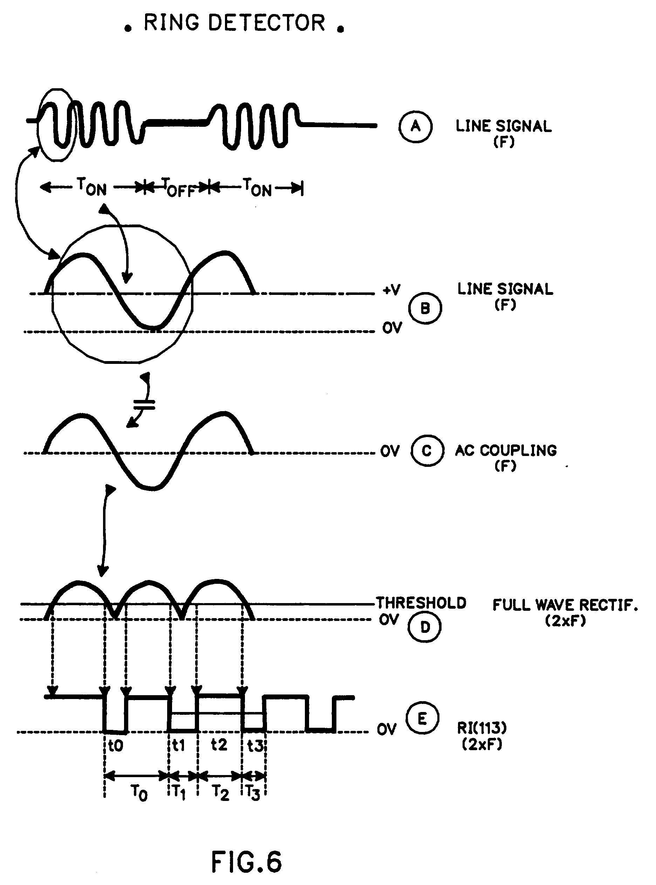

A circuit 223 for adapting the impedance is connected in parallel between the secondary leads of transformer 218. The latter circuit is used for fixing to a determined value, depending on the considered PSTN, the apparent impedance 'seen' from the telephone line. Transformer 218 is an usual transformer which can be used in traditional couplers for achieving a galvanic isolation between base card and the telephone line. Between leads 206 and 207 is connected inn circuit consisting of a capacitor Ci in series with a resistor Ri also in series with a RI detector circuit 224. RI detector 224 is used for detecting the ring voltage and activates Ring Indicate (RI) lead 113 accordingly. The activation of RI lead 113 can be detected by processor 160 via I/O circuit 165 which then executes tests in order to make sure that the RI signals which have appeared on lead 113 fully comply with the requirements of the specific PSTN to which is connected the DCE. The latter tests will be particularly described with respect to the 'incoming call' flowchart of figure 5 and to the ring detection process of figure 6.

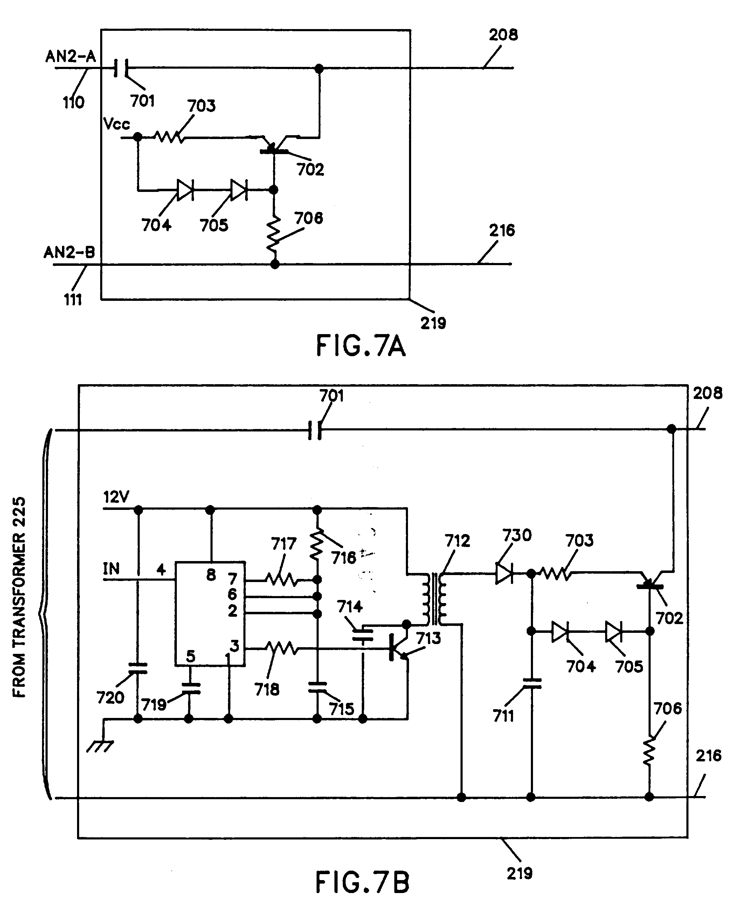

The leads 208 and 216 of relay 201 are connected to a secondary winding of a transformer 225 via local-feeder circuit 219. Transformer 225 has its primary winding connected to leads 110 and 111 and therefore achieves the galvanic isolation between the base card and the telephone set. It should however be noted that in the case when the latter isolation is not required, transformer 125 can be omitted. Local-feeder circuit 219 provides the telephone set with DC current and therefore allows its operating in the case when control processor activates lead 112. Local-feeder circuit will be described in detail with respect to Fig. 7A and 7B. The coupler 150 further includes a multiplexer 226 which has 8 input leads connected to a 8-bits bus 227 carrying a wired 8-bits identification code. That identification code characterizing the specific PSTN to which is adapted coupler 150, can be read by control processor 160 via the four leads 105-108. Multiplexer 226 has a control lead which is connected to dial-loop lead 104. When processor 160 activates lead 104, multiplexer 226 transmits the 4 Most significant bits of the identification code to leads 105-108. Conversely whenever control processor sets lead 104 to a low level, the Least significant bits of the identification code are transmitted to leads 105-108. Therefore, after a sequence of two read operations of leads 105-108, processor 160 derives the identification code of coupler 150 and therefore the type of PSTN to which it can be connected. As will be described with more details hereinafter, one the identification code has been recognized by processor 160 in an initialization step, the latter processor loads RAM storage 163 with the appropriate parameters corresponding to the specific coupler which is attached to base 120. It should be noticed that, for economy purpose, the coupler 150 should be as simple as possible and should only includes the hardware components which are required for matching the electrical requirements of the considered PSTN. Particularly, the interface bus 100-112 between base system 120 and coupler 150 should be as simple as possible. This is firstly achieved by using the same lead 104 for controlling multiplexer 226 in the initialization step and also for controlling Dial-loop circuit 217. The advantageous use of the same lead 104 for two control purpose does not jeopardize the operating of the multiplexer 226 and DL circuit 117 since the reading step of the identification code of coupler 150 takes place in an initialization period occurring after the power-on of the machine while the control of DL circuit 117 is effective only after that initialization period. As a matter of fact, as long as processor 160 does not communicate through the PSTN, telephone set 222 is connected to the network since leads 100 and 112 are at a low level. Consequently, the short-circuit appearing at the secondary winding of transformer 218 during the initialization period caused by processor 160 which has activated lead 104 in order to read the 4 MSB of the identification code, does not affect the PSTN network. The simplicity of the interface between base system 120 and coupler 150 is still achieved by means of multiplexer 226 which allows the transmission of a 8-bit code through only 4 leads 105-108.

Figure 3 particularly describes the country code validation step involved in the initialization period mentioned above. After the power-on of the machine, the base system 120 included into the DCE performs a power-on sequence which particularly consists in the internal tests of the major features of the machine, step 301. Then, step 302, processor 160 activates via I/O circuit 165 lead 104, what results in a first effect of performing a short circuit at the secondary of transformer 218 and also the transfer of the 4 MSB of the identification code to leads 105-108. As mentioned above, since transformer 218 is not connected to the PSTN, the latter short-circuit does not affect the operating of the network. Step 303, processor 360 loads the 4 MSB into RAM storage 163. Then step 304, processor 160 disactivates lead 104, what entails the transfer of the 4 LSB of the identification code to the leads 105-108, and also the suppression of the above short-circuit. The LSB are then stored into RAM 163, step 305. Then, step 306 processor 160 compares the full 8-bits identification code which has read from multiplexer 226 to the list of identification codes which are available into PROM 162, and each corresponding to a specific PSTN, to which the DCE is likely to be connected via coupler 150. If the code read from coupler 150 does not match one code of the above list stored into PROM 162, then processor 160 stops the power-on process and maintains lead 100-112 to a low level in order to prevent the connection of base system 120 to the PSTN. On the contrary, in the case when the code read from coupler 150 is recognized, processor 160 loads from PROM 163 into RAM 162, the parameters which are characteristics of the recognized PSTN such as the characteristics of the dial tone, the ring, etc As will be better understood in the description above, the latter parameters which are characteristics of the specific PSTN, to which is adapted coupler 150, includes tests parameters in particularly for the dial tone, the ring detection.

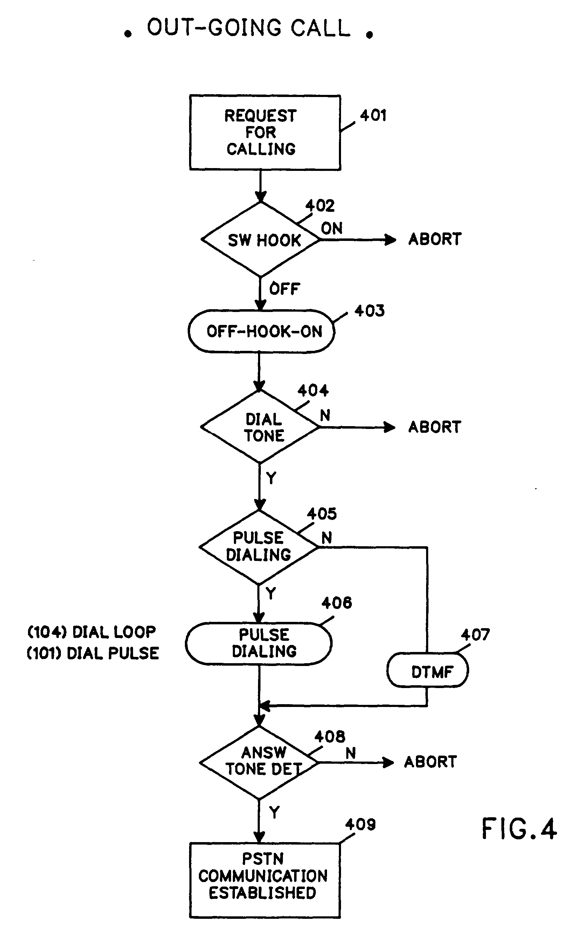

Figure 4 illustrates an out-going call process. The process is initiated with a request from the attached DTE, or from the user or application program running into the personal computer in which is plugged the base card 120, step 401. Step 402, processor 160 tests the status of SW hook line 109. If the latter line is active, in the case when a user is communicating with the telephone set 222 through the PSTN network, the request is aborted and the application program is informed. In the reverse case, the PSTN is available for a communication session and processor 160 goes to step 403 where it activates off-hook lead 100. Then processor 160 goes to step 404 where it waits for the appearance of a dial tone on the telephone line on leads 202, 203. The dial tone is transmitted via converters 171, filters 172 and hybrid 173 to processor 160. Processor 160 then performs a digital signal processing on the received dial tone in order to determine its frequency, its duration, its amplitude. Once the latter values have been measured by processor 160, those are compared with values stored into the PSTN tables stored into RAM 162 and which have been loaded with appropriate parameters value after the identification of the coupler 150. Generally speaking, the PSTN tables loaded into RAM 162 consist in ranges of values which corresponds to a specific PSTN. For example, in the case of France, the dial tone received by processor 160 should have a frequency comprised between comprised between 406 and 474 Hz. The processor 160 is therefore able to determine whether the received dial tone full complies with the requirements of the specific PSTN connected. If the measured values do not match the characterizing parameters stored into the mentioned PSTN tables, what may occur in the case when the PSTN is in a failure state or still in the case when the user has plugged a wrong coupler 150 (eg a coupler not designed for the specific PSTN), the process is then aborted and the leads 100-112 are maintained to a low level thus preventing any communication between base card 120 and the PSTN. In the reverse case, the process proceeds to step 405 where processor 160 reads into PSTN tables stored into RAM 160 whether a decadic or DTMF pulsing is required. If a decadic pulsing is required then processor 160 performs a succession of activation and disactivation of lead 101 in order to generate the appropriate break-make signals. Simultaneously to the pulsing, processor 160 activates DL lead 104 in order to perform a short circuit at the secondary winding of transformer 218. The PSTN tables stored into RAM 162 contain parameters defining the sequencing of the activating and disactivating of dial-pulse lead 101 which fully comply with the considered PSTN. On the contrary, if a DTMF pulsing is required then processor 160 goes to step 407 where it generates the appropriate tones on leads 102-103 to the PSTN, the latter appropriate tones being generated in accordance with parameters (frequency, duration) depending on the specific PSTN and stored into the above mentioned tables. Step 408, processor 160 waits for an answer tone having characteristics complying with the parameters stored into the above mentioned PSTN tables. If an answer tone has been detected, then processor 160 goes to step 409 which completes the process of establishment of the out-going call. From that instant, the base card 120 of the DCE according to the present invention is ready to communicate with a remote DCE via the PSTN.

Figures 5 and 6 illustrate the incoming call process that is to say to procedure which is carried out by the DCE in order to analyze a ring signal in accordance with the requirements of a specific PSTN. The ring signal appearing on the telephone line at the input of ring detector circuit 224 is illustrated with respect to figures 6A and consists in a succession of bursts appearing during Ton period and separated by silences having a period Toff. An elementary sinusoïde wave is detailed in figure 6B. Ring detector circuit 224 has a first function of suppressing the DC component of the signal, as illustrated with respect to figure 6C. Ring detector circuit performs a full-wave rectifying operation on the signal of figure 6C in order to provide a rectified signal such as illustrated in figure 6D. The signal is then compared with a threshold value depending on the characteristics of the PSTN. That particularly shows that the design of RI detector 224 and more generally the electronic components included therein, closely depends on the specific PSTN to which the coupler 150 is intended to be connected, that specific PSTN being defined by the identification code wired on bus 227. On the contrary, base system is unique for all PSTN considered. The adaptation of base card 120 is achieved by loading RAM 163 with appropriate parameters stored into PROM 163, those parameters corresponding to the identification code read from coupler 150 during the initialization period described in reference with figure 3. The comparison of the rectified signal to the above threshold provides a squared wave signal on RI lead 113 illustrated in figure 6E. Then processor 160 performs an analysis of the latter signal shown in figure 5 in order to determine the validity of the detected ring signal. The analysis of the signal first begins step 501 by a test in order to detect the appearance of a negative transitions on RI lead 113. At the appearance (t0) of a negative transition, processor 160 performs a measure of the frequency of the squared wave signal on lead 113, step 502. To achieve this, processor 160 waits for the next negative transition appearing, if so, at t1 in order to measure the period T0=t1-t2 between the two first negative transitions. From the measure of T, processor 160 estimates the value of the frequency of the ring signal and compares it to the range loaded into the PSTN tables which were loaded at the initialization step of figure 3. If the latter estimation of the ring frequency is not comprised between the minimum and the maximum value authorized in the table corresponding to the PSTN connected to the DCE, processor 160 proceeds to step 501. In the reverse case, processor 160 goes to step 503 where it measures the period T1 separating the instant t1 and the occurrence t2 of the following positive transition. Then, step 503, processor 160 checks whether the latter measured period T1 is comprised within the range of values stored into the PSTN table located into RAM 163. If T1 is comprised between the minimum and maximum authorized values T1min and T1max, then processor 160 goes to step 504. In the reverse case, the ring signal is considered invalid and the process goes back to step 501. Step 504, processor 160 performs a measure of the period T2 separating the instant t2 with the occurrence t3 of the following negative transition and tests that measured value. If the latter value is found to be comprised within a range of authorized values T2min and T2max, then the process proceeds to step 505, otherwise processor 160 goes back to step 501. Then processor 160 performs a next measure consisting in the measure of the period T3 separating the instant t3 with the occurrence of the following positive transition t4. If the measured value T3 is found to be comprised within a range of authorized values T3min and T3max, then the process proceeds to step 506, otherwise it proceeds to step 501. The successive testing of the measured values T1, T2 and T3 therefrom permits the DCE to be largely insensitive to the noise which is likely to appear at the input of ring detector 224. In order to improve the immunity to the noise, ring detector circuit 224 also includes a Schmidt trigger (not shown in the figure 2). Step 506, processor 160 performs the continuous measure of the period corresponding to a low level of the squared wave signal on lead 113 in order to detect the beginning of a silence period Toff as shown in figure 6A. For that purpose, processor 160 compares that measured period during which the signal on lead 113 is at a low level to a second predetermined threshold value loaded into the tables in RAM 163. Whenever, the measured period is equal to that second threshold, processor 160 performs the seizing of the line by activating leads 100 and 101, step 507. That second threshold value is chosen so that to make sure that the seizing of the telephone line will be performed approximately near middle of the Toff period corresponding to a silence of the ring signal. It has been noticed that the seize of the line during a Ton period corresponding to the existence of energy on the telephone line might cause great damage to coupler 150 and particularly to transformer 218. It is therefore essential to make sure that the seize of the telephone line will not occur during the existence of energy on the line. That is achieved in the coupler according to the invention by comparing the period corresponding to a low level of signal 113 to the second threshold which is stored into the tables in RAM 163 which correspond to the identification code of the coupler and have been loaded during the initialization step of figure 3. Since in France, two consecutive rings are separated by a silence of approximately 3 seconds, the second threshold value loaded into the RAM 163 and corresponding to the French PSTN is chosen to be equal to 1 second.

Coupler 150 according to the present invention permits the use of the telephone set 222 in different modes. In a first mode, the telephone set is used as traditionally, in order to transmit and receive voice messages through the PSTN. In a second mode, coupler 150 permits the transmission of voice from the telephone set 222 to the base card 120 while processor 160 is in a data communication session trough the PSTN network. In that second mode, the voice is concurrent to the data transmission via leads 202-203.

The first mode is achieved by means of the disactivation of leads 100 and 112. Therefore the telephone set 222 is connected to the PSTN network via relays 200 and 201. In this 'on-hook' mode, the telephone set 222 can be used by an user for transmitting voice through the PSTN.

The second mode, or 'Off-hook' is achieved by activating leads 100 and 101 and disactivating lead 112. This carries out the connection of leads 102/103 to the telephone network via transformer 218, circuit 223, DL circuit 217, DP circuit 214 and relay 200. By transmitting digital data to D/A converter 171, and conversely by processing the digital data received from A/D converter 171, processor 160 is able to exchange data with a remote DTE or transmit and receive an analog signal with a remote telephone set.

In a third mode, called 'voice recording local communication mode', telephone set 222 is used for transferring voice into base card 120 at the same time than a possible data communication between the DCE and a remote DCE through the PSTN. For this purpose, processor 160 activates lead 112, what entails the connection of the telephone set to the local feeder 219 and to the transformer 225 via relay 201. Local feeder circuit 219 provides telephone 222 with a continuous DC current, being approximately equal to 20 milli-amperes in the preferred embodiment of the invention. The microphone of the telephone set 222 can thus be used for generating an analog electrical signal which is transmitted via relay 201, circuits 219 and 225 to leads 110 and 111. The analog signal existing on leads 110 and 111 is then transmitted to hybrid 182, then filtered by circuit 182 and converted into digital words by means of A/D circuit 181. The digital samples appearing at the output of the A/D converter 181 are then available on bus 161 and are stored into RAM 163 by processor 160 for further processing. Conversely, processor 160 can read data located into RAM 163 and transmit them to digital-to-analog converter 181 via bus 161. The analog signal is then filtered by filter 182 and transmitted via hybrid circuit 183 to leads 110 and 111. The vocal message are transmitted to the telephone set 222 via relay 201 since lead 112 is activated.

In a fourth mode, processor 160 transmits differed data which have been stored into RAM 163 while in the above second mode, the latter data consisting of a digitalized vocal message which is intended to be transmitted to a remote telephone set. For that purpose, processor 160 initiates an out-going call such as described above with respect to figure 4. When the communication is established, processor 160 transmits the digitalized vocal message to D/A converter 171 via bus 161. The digitalized message is converted into analog form, filtered by filter 172 and then transmitted to hybrid circuit 173. Since leads 100 and 101 are activated, the vocal message is thus transmitted to the remote telephone set via relay 200 and the PSTN. It should be noticed that the DCE according to the present invention can be used for achieving the routing an incoming call to a remote telephone set. For this purpose, processor 160 activates leads 100 so that the vocal message is transmitted to transformer 218 via relay 200. The analog signal appearing at leads 102/103 is then transmitted to hybrid 173, then to filters 172 and then to A/D converter 171. The digital samples are then directly stored into RAM 163. Once the vocal message has been entirely stored, at the detection of the end of the communication by processor 160, the latter processor initiates an outgoing call process in order to establish a communication with a determined remote telephone set. The telephone set to be called is identified by identification data which have also been stored into RAM 163, either by the user or by the application program in the case when the DCE is used as an interface card for a personal computer. The establishment of the communication with the determined telephone set is carried out in accordance with the procedure which is described with respect to figure 4. Once the communication is established with the remote telephone set, processor 160 unloads the digitalized samples from RAM storage 163 to D/A converter 171, filter 182 and hybrid 183 which restitute the analog vocal message on leads 102/103. Since processor 160 has activated leads 100 and 101, the analog vocal message is transmitted to the remote telephone set via relay 200 and the PSTN. Therefore, the DCE according to the present invention can be used as a rerouter of telephone calls from a remote telephone set to another remote telephone set.

It should be noticed that the DCE according to the invention can provide the user or the application program (in the case when the DCE is embodied as an interface card for a personal computer) with a test routine which permits the entire check coupler 150. For this purpose, a external loop is performed by connecting 'tip-ring' leads 202 and 203 to leads 213 and 214. Once the external loop has been established, processor 160 activates leads 100, 101 and also lead 112. Therefore, the local feeder circuit 219 provides block 223 with DC current. Then processor 160 generates a test pattern to leads 102/103 via D/A circuit 171, filter 172 and hybrid 173. The analog signal corresponding to the test pattern is then transmitted from transformer 218 to the 'tip-ring' leads 202/203 via circuits 223, 214 and relay 200. The analog signal is then transmitted back to leads 110 and 111 via relay 201, local feeder 218 and transformer 225. The analog signal is then converted back to digital samples by A/D converter 181 and the corresponding received test pattern is stored into RAM 163. Processor 160 then performs a comparison between the transmitted and the received test pattern in order to determine a potential failure in one of the components of coupler 150, and in case when the DCE according to the invention is embodied as an interface card for a personal computer, reports the failure state to the user or the application program.

Figures 7A and 7B shows illustrative embodiments of local feeder circuit 219.

In a first preferred embodiment of Fig. 7A, which is used when no galvanic isolation is required between base circuit 120 and the telephone set 222, local feeder circuit 219 includes a capacitor 701 for preventing the DC current provided by a current source based on a PNP transistor 702 from flowing through leads 110-111. Transistor 702 has its emitter connected to a first lead of a resistor 703 having its second input connected to positif voltage source Vcc supplied by base card 120. Positive supply voltage Vcc is also connected to the anod of a first diod 704 which has its cathod connected to the anod of a second diod 705 having its cathod connected either to base of transistor 702 and to a first lead of a resistor 706. Resistor 706 has its second lead connected either to AN2-B lead 111 (since transformer 225 is not required) and to lead 216. Capacitor 701 has a first lead connected to AN2-A lead 110 and a second lead connected either to the collector of transistor 702 and to lead 208. Therefore, transistor 702 provides telephone set 222 via leads 208-216 with DC current, which value being closely dependent on the value of resistor 703 and approximately equal to 0.7 Volt/R, where R is the value of the latter resistor.

In the case when the base circuit (and therefore the personal system to which is connected to base circuit 120) must be isolated from either the PSTN and the telephone set 222, transformer 225 and a local feeder circuit 219 providing a galvanic isolation between base card 120 and telephone 222 are required. Such a local feeder circuit is shown with respect to figure 7B which uses a DC/DC converter based upon an oscillator circuit and a third transformer 712. The oscillator circuit includes a integrated circuit of the type 555 well known by the skilled man which provides a squared wave signal at its output lead 3. The squared wave signal is used to control a NPN transistor 713 having its emitter connected to ground and its collector connector a first lead of primary winding of transformer 712, a second lead of which being connected to positive supply voltage Vcc (12 Volts). The secondary winding of transformer 712 therefore provides an AC signal which is rectified by means of a diode 730 and filtered by a capacitor 711 and which can be used for supplying DC current source based on transistor 702 and described above.

More particularly, in the preferred embodiment of the invention, integrated circuit 555 has its first pin connected to ground potential, its second and sixth pins connected to a first lead of a resistor 716 having a second lead connected to the positive supply voltage Vcc, a third lead connected to the base of transistor 713 via a resistor 718 for limiting the current through the latter base, a fourth pin which is used as an inhibit control lead under control of base card 120. Integrated circuit 555 has its fifth pin connected to ground via a capacitor 719 and its seventh pin connected to the first lead of resistor 716 via a resistor 717 and, at last, its eighth pin connected to the positive supply voltage.

A capacitor 714 is connected between the first lead of primary winding of transformer 712 and ground potential. Pins 6 and 2 of integrated circuit NE 555 are also connected to ground potential via a capacitor 715. A capacitor 720 is connected between positive voltage source Vcc and ground for decoupling purpose.

Transformers 225 and 712 should be chosen so that to provide the required galvanic isolation. For instance, in the case of a coupler designed to be connected to the United Kindom PSTN, a 3 Kvolt isolation is required.

In the following table is more particularly described some parameters which are stored into RAM 143 during the initialization phase and which characterized a given PSTN. The parameter below are indicated with respect to two different examples, i.e. France and Germany.

**TABLE**

| PARAMETER | FR | DE |
|---|---|---|
| RING | | |
| Min Freg | 18 Hz | 20.5 Hz |
| Max Freg | 60 Hz | 57.5 Hz |
| RI glitch at state 0 Max Value | 2 ms | 5 ms |
| RI State 2 Min Value | 60 Hz | 57.5 Hz |
| DIALING | | |
| DTMF-Global Level DTMF | -4 dBm | - 4 dBm |
| DTMF Interdigit Value | 70 ms | 2 ms |
| PULSE-Delay between Dial loop and 1st digit | 25 ms | 0 ms |
| Delay between Dial loop OFF and last digit | 40 ms | 0 ms |
| Break duration | 60 Hz | 60 ms |
| Make duration | 33 ms | 40 ms |
| Interdigit delay | 0.9 sec | 1.1 sec |
| AUTO CALL V25 bis | | |
| Pause duration after line Seize | 0 | 3 sec |
| CRN/CRI indicator | CRB only | CRI only |
| MODEM MANAGEMENT | | |
| Guard Tone Xmit | yes | No |
| Nominal Xmit level | -10 dBm | -7 dBm |
| Auto Disconnect on RD notactive | 189 sec | 120 sec |
| TONE DETECTION | | |
| Duration of Dial Tone Analysis | 1.3 sec | 0 |
| Busy tone Min duration | 200 ms | 0 |
| Busy tone Max duration | 600 ms | 0 |
| FILTER SELECTION | | |
| Dial Tone Filter selection | 325-480 Hz | 0 |
| Busy Tone Filter selection | 400-480 Hz | 0 |

## Claims

1. Coupling device (150) for connecting a Data Circuit Terminating Equipment (DCE) to a public Switched Telephone Network (PSTN) including electronic components matching the electric requirements of a specific PSTN, said coupling device comprising:
- plugging means (130) for removably connecting said coupling device (150) to said DCE;
- storage means (227) for storing an identification code uniquely identifying said specific PSTN;
- transmission means (226) responsive to a control signal received from said DCE for transmitting said identification code to said DCE;
characterized in that:
said storage means (227) consists of a wired bus formed by n parallel-mounted wires, each carrying a logical state of said identification code; and
said transmission means (226) comprises multiplexing means receiving said control signal from said DCE for transmitting either the most significant bits or the less significant bits of said identification code in accordance with the logical state of said control signal.

2. Coupling device according to claim 1 characterized in that it further includes:
- a transformer (218) allowing the galvanic isolation between said DCE and said PSTN;
- short-circuit means (217) for short-circuiting said transformer during the dialing phase, said short-circuit means being controlled by said control signal.

3. Data Circuit Terminating Equipment (DCE) for the connection of a Data Terminating Equipment (DTE) to a Public Switched Telephone Network (PSTN) including processing means (160) and storage means (162) for storing tables, each table comprising data characterizing a specific PSTN to which said DCE subassembly is intended to operate with, characterized in that it further includes:
- means for removably attaching a coupling device (150) as defined in claim 1 or 2;
- means (160, 165) for transmitting a control signal (104) during an identification phase for determining the type of said coupling device;
- means (160) for reading said identification code stored into said coupling device (150);
- means (160, 162) for selecting the appropriate table corresponding to said specific PSTN in response to said reading of said identification code;
whereby said DCE is automatically adapted to operate within said PSTN.

4. DCE according to claim 3 characterized in that said control signal is used during a dialing phase for controlling a short-circuit means (217) for short-circuiting a galvanic isolation transformer included into said coupling device.

5. Data Circuit Terminating Equipment (DCE) comprising the coupling device according to claim 1 or 2, said coupling device being removably connected inside said DCE.

6. DCE according to claim 4 or 5 characterized in that said tables stored into said storage means (162) comprises data relative to the dial tone corresponding to said PSTN.

7. DCE according to claim 6 characterized in that said tables stored into said storage means (162) comprise data relative to the frequency, the duration and the amplitude of the dial tone.

8. DCE according to claim 7 characterized in that said tables loaded into said storage means (162) comprise data relative to the ring signal which is conveyed through said given PSTN.

9. DCE according to claim 8 characterized in that it consists of an interface card to be plugged into a workstation

10. Workstation having a DCE in accordance with claim 9.

11. Workstation having a DCE in accordance with claims 3 or 5.

## Patentansprüche

1. Koppungseinrichtung (150) zum Anschluß einer Datenübertragungseinrichtung (DEE) an ein öffentliches Fernsprechwählnetz (PSTN) mit elektronischen Baugruppen, die die elektrischen Anforderungen eines speziellen PSTN erfüllen, wobei die Kopplungseinrichtung umfaßt:
- Steckvorrichtungen (130), um diese Kopplungseinrichtung (150) an die DÜE lösbar anzuschließen;
- Speichermittel (227) zur Speicherung eines Identifikationscodes, der das jeweilige PSTN eindeutig identifiziert;
- Übertragungsmittel (226), die auf ein von dieser DÜE empfangenes Steuersignal ansprechen, um den Identifikationscode zu dieser DÜE zu übertragen;
gekennzeichnet dadurch, daß
die Speichermittel (227) aus einem verdrahteten Bus mit n parallelen Leitungen bestehen, von denen jeder einen logischen Zustand dieses Identifikationscodes überträgt;
und die Überträgungsmittel (226) Multiplexeinrichtungen enthalten, die dieses Steuersignal von der DÜE empfangen, um entweder die höchstwertigen Bits oder die niedrigstwertigen Bits des Identifikationscodes entsprechend dem logischen Zustand des Steuersignals zu übertragen.

2. Kopplungsvorrichtung gemäß Anspruch 1, dadurch gekennzeichnet, daß sie weiterhin umfaßt:
- einen Transformator (218), der die galvanische Isolation der DÜE und des PSTN ermöglicht;
- eine Kurzschlußvorrichtung (217) zum Kurzschließen des Transformators während der Wählphase, wobei die Kurzschlußvorrichtung vom Steuersignal gesteuert wird.

3. Datenübertragungseinrichtung (DÜE) für den Anschluß einer Datenendeinrichtung (DEE) an ein öffentliches Telefonwählnetz (PSTN), die Verarbeitungsmittel (160) und Speichermittel (162) zum Speichern von Tabellen enthält, wobei jede Tabelle Daten enthält, die ein spezielles PSTN kennzeichnen, mit dem zusammen die DÜE-Unterbaugruppe betrieben werden soll, dadurch charakterisiert, daß sie weiterhin enthält:
- Mittel, um eine Kopplungseinrichtung (150), wie sie in Anspruch 1 oder 2 definiert wurde, lösbar anzuschließen;
- Mittel (160, 165) zur Übertragung eines Steuersignals (104) während einer Identifikationsphase zur Bestimmung des Typs der Kopplungsvorrichtung;
- Mittel (160) zum Lesen des Identifikationscodes, der in der Kopplungseinrichtung (150) gespeichert ist;
- Mittel (160, 162) zur Auswahl der geeigneten Tabelle, die dem speziellen PSTN entspricht, als Reaktion auf das Lesen des Identifikationscodes;
wobei die DÜE automatisch an die Arbeit mit dem PSTN angepaßt wird.

4. DÜE entsprechend Anspruch 3, dadurch gekennzeichnet, daß das Steuersignal während einer Wählphase zur Steuerung einer Kurzschlußvorrichtung (217) benutzt wird, um einen galvanischen Isolationstransformator kurzzuschließen, der in der Kopplungseinrichtung enthalten ist.

5. Datenübertragungseinrichtung (DÜE), die die Kopplungseinrichtung gemäß Anspruch 1 oder 2 enthält, wobei die Kopplungseinrichtung innerhalb der DÜE lösbar angebracht ist.

6. DÜE entsprechend Anspruch 4 oder 5, dadurch gekennzeichnet, daß die im Speichermittel (162) gespeicherten Tabellen Daten bezüglich des Wahltones enthalten, der dem PSTN entspricht.

7. DÜE entsprechend Anspruch 6, dadurch gekennzeichnet, daß die im Speichermittel (162) gespeicherten Tabellen Daten bezüglich der Frequenz, der Dauer und der Amplitude des Wähltones enthalten.

8. DÜE entsprechend Anspruch 7, dadurch gekennzeichnet, daß die in das Speichermittel (162) geladenen Tabellen Daten bezüglich des Rufsignals enthalten, das durch das jeweilige PSTN übertragen wird.

9. DÜE entsprechend Anspruch 8, dadurch gekennzeichnet, daß sie aus einer Schnittstellenkarte besteht, die in eine Arbeitsstation einzustecken ist.

10. Arbeitsstation mit einer DÜE gemäß Anspruch 9.

11. Arbeitsstation mit einer DÜE gemäß Anspruch 3 oder 5.

## Revendications

1. Dispositif de couplage (150) destiné à relier un Equipement de Terminaison de Circuit de Données ETCD à un Réseau Téléphonique Commuté Public (RTCP) comprenant des composants électroniques correspondant aux exigences électriques d'un Réseau Téléphonique Commuté Public particulier, ledit dispositif de couplage comprenant :
- un moyen d'enfichage (130) destiné à relier de façon amovible ledit dispositif de couplage (150) audit Equipement de Terminaison de Circuit de Données,
- un moyen de mémorisation (227) destiné à mémoriser un code d'identification identifiant de façon unique ledit Réseau Téléphonique Commuté Public particulier,
- un moyen de transmission (226) répondant à un signal de commande reçu à partir dudit Equipement de Terminaison de Circuit de Données afin de transmettre ledit code d'identification audit Equipement de Terminaison de Circuit de Données,
caractérisé en ce que :
ledit moyen de mémorisation (227) consiste en un bus filaire formé de n fils montés en parallèle, chacun transportant un état logique dudit code d'identification, et
ledit moyen de transmission (226) comprend un moyen de multiplexage recevant ledit signal de commande issu dudit Equipement de Terminaison de Circuit de Données afin de transmettre soit les bits les plus significatifs, soit les bits les moins significatifs dudit code d'identification en conformité avec l'état logique dudit signal de commande.

2. Dispositif de couplage selon la revendication 1 caractérisé en ce qu'il comprend en outre :
- un transformateur (218) permettant l'isolation galvanique entre ledit Equipement de Terminaison de Circuit de Données et ledit Réseau Téléphonique Commuté Public,
- un moyen de court-circuit (217) destiné à court-circuiter ledit transformateur pendant la phase de numérotation, ledit moyen de court-circuit étant commandé par ledit signal de commande.

3. Equipement de terminaison de circuit de données (ETCD) destiné à la liaison d'un équipement terminal de traitement de données (ETD) avec un Réseau Téléphonique Commuté Public (RTCP) comprenant un moyen de traitement (160) et un moyen de mémorisation (62) afin de mémoriser des tableaux, chaque tableau comprenant les données caractérisant un Réseau Téléphonique Commuté Public particulier avec lequel ledit sous-ensemble d'Equipement de Terminaison de Circuit de Données est destiné à fonctionner, caractérisé en ce qu'il comprend en outre :
- un moyen pour fixer de façon amovible un dispositif de couplage (150) tel que défini dans la revendication 1 ou la revendication 2,
- un moyen (160, 165) destiné à transmettre un signal de commande (104) pendant une phase d'identification afin de déterminer le type dudit dispositif de couplage.
- un moyen (160) destiné à lire ledit code d'identification mémorisé dans ledit dispositif de couplage (150),
- un moyen (160, 162) destiné à choisir le tableau approprié correspondant audit Réseau Téléphonique Commuté Public particulier en fonction de ladite lecture dudit code d'identification,
ce par quoi ledit Equipement de Terminaison de Circuit de Données est automatiquement adapté pour fonctionner à l'intérieur dudit Réseau Téléphonique Commuté Public.

4. Equipement de terminaison de circuit de données selon la revendication 3, caractérisé en ce que ledit signal de commande est utilisé pendant une phase de numérotation pour commander un moyen de court-circuit (217) destiné à court-circuiter un transformateur d'isolement galvanique incorporé dans ledit dispositif de couplage .

5. Equipement de Terminaison de Circuit de Données (ETCD) comprenant le dispositif de couplage selon les revendications 1 ou 2, ledit dispositif de couplage étant relié de façon amovible à l'intérieur dudit Equipement de Terminaison de Circuit de Données.

6. Equipement de Terminaison de Circuit de Données selon les revendications 4 ou 5, caractérisé en ce que lesdits tableaux mémorisés dans ledit moyen de mémorisation (162) comprennent des données relatives à la tonalité d'invite à numéroter correspondant audit Réseau Téléphonique Commuté Public.

7. Equipement de Terminaison de Circuit de Données selon la revendication 6, caractérisé en ce que les tableaux mémorisés dans ledit moyen de mémorisation (162) comprennent les données relatives à la fréquence, la durée et l'amplitude de la tonalité d'invite à numéroter.

8. Equipement de Terminaison de Circuit de Données selon la revendication 7, caractérisé en ce que lesdits tableaux situés à l'intérieur dudit moyen de mémorisation (162) comprennent des données relatives au signal d'appel qui est acheminé au travers dudit Réseau Téléphonique Commuté Public donné.

9. Equipement de Terminaison de Circuit de Données selon la revendication 8 caractérisé en ce qu'il consiste en une carte d'interface à enficher dans un poste de travail.

10. Station de travail possédant un Equipement de Terminaison de Circuit de Données selon la revendication 9.

11. Station de travail possédant un Equipement de Terminaison de Circuit de Données selon les revendications 3 ou 5.
